# EUROPÄISCHE PATENTSCHRIFT

(11) **EP 0 433 270 B1**
(45) Veröffentlichungstag und Bekanntmachung des Hinweises auf die Patenterteilung: **08.03.1995**
(21) Anmeldenummer: 91103248.0
(22) Anmeldetag: 16.12.1985
(51) Int. Cl.: A61C 17/14

(54) **Verfahren und Abscheider zur Trennung eines Feststoff-Flüssigkeits-Saugluftgemisches**
Separator and procedure to separate solid particles from a solid-air mixture
Séparateur et procédé pour séparer les particules solides de l'air d'aspiration

(30) Priorität: 17.12.1984 AT 3986/84
(43) Veröffentlichungstag der Anmeldung: 19.06.1991
(62) Teilanmeldung aus: 86900003.4
(73) Patentinhaber: Trawöger, Werner, 6020 Innsbruck (AT); PREGENZER, Bruno, 6173 Oberperfuss (AT)
(72) Erfinder: Trawöger, Werner, 6020 Innsbruck (AT); PREGENZER, Bruno, 6173 Oberperfuss (AT)
(74) Vertreter: Torggler, Paul, Dr.

(56) Entgegenhaltungen:
- WO-A-83/02720
- DE-A- 2 713 321
- FR-A- 2 103 990
- FR-A- 2 196 833
- FR-A- 2 463 748
- GB-A- 1 106 858
- GB-A- 2 141 044
- SE-B- 427 988
- US-A- 2 759 476

## Beschreibung

Die Erfindung betrifft ein Verfahren zur Trennung eines dentalen Feststoff-Flüssigkeits-Saugluftgemisches in einem zahnärztlichen Abscheider, wobei zuerst die transportierende Saugluft in einem Luftabscheideraum entfernt und das verbleibende Feststoff-Flüssigkeitsgemisch in einem abnehmbaren Absetzbehälter gesammelt wird, in dem der Hauptteil der Feststoffe abgelagert wird, wobei die Flüssigkeit durch einen gegen einen Falschlufteintritt gesicherten Flüssigkeitsauslaß gegen den Saugluftunterdruck ausgetragen wird, wenn der Flüssigkeitsstand eine vorgegebene Höhe erreicht. Weiters betrifft die Erfindung auch einen Abscheider zur Trennung eines Feststoff-Flüssigkeits-Saugluftgemisches in zahnärztlichen Absaugeinrichtungen, mit einem Gehäuse mit einem Umlenkflächen aufweisenden Luftabscheideraum, in den ein Einlaß für das von einer Saugdüse kommende Gemisch mündet, und von dem ein Reinluftauslaß zu einer Saugpumpe führt, mit einem unter dem Luftabscheideraum angeordneten, vom Gehäuse abnehmbaren Absetzbehälter für die Ablagerung der Feststoffe, und mit einer ein hochstehendes Rohrstück und eine Hilfspumpe aufweisenden Einrichtung zur Überleitung der sich im Absetzbehälter sammelnden Flüssigkeit zu einem gegen einen Falschlufteintritt gesicherten Flüssigkeitsauslaß.

Ein Verfahren und ein Abscheider dieser Art sind beispielsweise der EP-B-100 327 (& WO-A-83102720) zu entnehmen. Der dortige Abscheider weist ein von einer Halterung abnehmbares, becherförmiges Gehäuse auf. In der Halterung ist ein Gemischeingang, ein Saugluftausgang und ein Flüssigkeitsausgang vorgesehen. Der Flüssigkeitsausgang kann an eine Strahl- bzw. Saugpumpe angeschlossen werden, mit deren Hilfe Flüssigkeit gegen den Saugluftunterdruck aus dem becherförmigen Gehäuse abgesaugt wird.

Hiezu weist der Flüssigkeitsausgang ein sich bis zum Boden des Gehäuses erstreckendes Rohr auf, das eine Filterpatrone trägt, die die Mitnahme gesammelter Feststoffe verhindern soll. Die Filterpatrone verlegt sich jedoch ziemlich rasch, da der feine Feststoffanteil groß ist. Die Rückgewinnung der Feststoffe aus der Filterpatrone stellt eine zusätzliche Arbeit dar, die aufgrund der Zusammensetzung des Gemisches ekelerregend und gesundheitsgefährdend ist.

Weitere Abscheider für die Dreiphasentrennung zeigen die DE-A- 32 31 272 und 32 42 212. Dort wird zuerst die Saugluft abgeschieden und das verbleibende FeststoffFlüssigkeitsgemisch mittels einer Pumpe in einen syphonartigen Sammelbehälter überführt, der nach der DE-A- 32 31 272 Filtereinsätze aufweist. Ohne diese Filtereinsätze werden sich aufgrund der Strömung nur wenige schwerere Teilchen absetzen, mit den Filtereinsätzen entsteht das oben geschilderte Problem, da sie durch den hohen Feinanteil rasch verlegt werden.

Nach der DE-B-23 42 543 erfolgt ebenfalls eine Dreiphasentrennung, wobei im Oberteil eines Gehäuses die Luftabscheidung erfolgt, der Unterteil einen Sammelbehälter darstellt und der Mittelteil mit einem Einsatz und mit einer ringförmigen Tasche oder Rinne versehen ist. Unterteil und Mittelteil werden mit einem Gemisch aus Wasser und Öl so gefüllt, daß schwerere Teile in der Tasche und leichtere Teile im Sammelbehälter sedimentieren. Die Flüssigkeit fließt über einen Überlauf ab, dessen Einlaß zwischen dem Mittelteil und dem Unterteil liegt, und dessen Auslaß ein Rückschlagventil beinhaltet. Hier liegt eine Art von zweistufiger Sedimentation vor, wobei jedoch die Verwendung einer Öl-Wasser-Mischung in der Praxis indiskutabel ist.

Eine zweistufige Trennung eines bloßen Feststoff-Flüssigkeitsgemisches ist aus der SE-B-427 988 bekannt. Die Haupttrennstufe findet dort in einer Zentrifuge statt, der ein Vorfilter vorgesetzt sein kann, der auch durch einen Sedimentationsbehälter gebildet sein kann. Eine Luftabscheidung ist nicht vorgesehen.

Im DE-U-83 14 829 ist eine zweistufige Sedimentation von Feststoffen beschrieben, indem das Saugluft-Flüssigkeits-Feststoffgemisch durch zwei in Serie angeordnete Behälter geleitet wird. Eine Trennung der Saugluft von der Flüssigkeit ist hier nicht vorgesehen.

Die Erfindung hat es sich nun zur Aufgabe gestellt, einen Abscheider der eingangs genannten Art zu entwickeln, der bei möglichst einfacher Konstruktion ohne Filter eine weitgehende Dreiphasentrennung bewirkt, sodaß neben der Reinluft auch reine, das heißt feststofffreie Flüssigkeit den Abscheider verläßt.

Erfindungsgemäß wird dies auf zwei verschiedene Arten erreicht. Ein erstes Verfahren sieht hiezu vor, daß die Flüssigkeit aus einer oberhalb einer maximalen Feststoffablagerungshöhe liegenden Flüssigkeitssammelzone des Absetzbehälters in mindestens einen weiteren, in den Luftabscheideraum offenen Absetzbehälter überführt und aus dem weiteren Absetzbehälter zum Flüssigkeitsauslaß übergeleitet wird. Durch die Entnahme der Flüssigkeit an höchstmöglicher Stelle im abnehmbaren Absetzbehälter stellt dieser ein wirksames Beruhigungsbecken dar und die Flüssigkeit wird aus einer geklärten Zone entnommen. Bei einem zur Durchführung des Verfahrens geeigneten Abscheider ist vorgesehen, daß die Einrichtung zur Überleitung der Flüssigkeit zumindest einen weiteren, in den Luftabscheideraum offenen Absetzbehälter aufweist, wobei die Eintrittsöffnung in jedem Absetzbehälter oberhalb einer maximalen Feststoffablagerungshöhe liegt, und daß die Hilfspumpe dem letzten Absetzbehälter zugeordnet und der Flüssigkeitsauslaß durch ein an der Druckseite der Hilfspumpe angeordnetes Rückschlagventil gegen den Falschlufteintritt gesichert ist. Es sind somit innerhalb des Unterdrucksystems zwei, gegebenenfalls auch mehrere Sedimentationsstufen vorgesehen, und es wird mit einfachsten konstruktiven Mitteln eine funktionssichere Dreiphasentrennung erzielt. Noch enthaltene Feststoffe können sich im weiteren Absetzbehälter ablagern, sodaß das den Falschlufteintritt hindernde Ventil von praktisch feststofffreier Flüssigkeit durchströmt wird.

Der Flüssigkeitsauslaß ist vorteilhaft mit Abstand vom Boden des weiteren Absetzbehälters ebenfalls an einem hochstehenden Rohrstück ausgebildet. In dieses kann in einer bevorzugten Ausführung der Ansaugkanal der Hilfspumpe eingesteckt sein. Zur Schaltung der Hilfspumpe können die Leitfähigkeit der Flüssigkeit messende Einrichtungen vorgesehen sein.

Beim zweiten Verfahren ist erfindungsgemäß vorgesehen, daß die Flüssigkeit aus einer oberhalb einer maximalen Feststoffablagerungshöhe liegenden Flüssigkeitssammelzone des Absetzbehälters durch den Flüssigkeitsauslaß in eine unter Normaldruck stehende Zentrifuge ausgetragen und dort zentrifugiert wird, wobei in der Flüssigkeit enthaltenen Feststoffe nach jeder Zentrifugierphase unter Schwerkrafteinwirkung aus der Zentrifuge ausfließen. Bei einem hiezu geeigneten Abscheider ist vorgesehen, daß die Eintrittsöffnung der Einrichtung zur Überleitung der Flüssigkeit oberhalb einer maximalen Feststoffablagerungshöhe liegt, daß die Hilfspumpe als Flügelradpumpe ausgebildet ist, und daß an deren Druckseite eine Zentrifuge angeschlossen ist, wobei der Flüssigkeitsauslaß gegen einen Falschlufteintritt durch ein Rückschlagventil gesichert ist, das zwischen der Hilfspumpe und der Zentrifuge im Zentrifugeneintrittsraum angeordnet ist. Die Anordnung der Zentrifuge im Normaldruck erlaubt es, in der Zentrifuge zusätzlich bzw. gleichzeitig auch ein weiteres, von der Speischale abfließendes Feststoff-Flüssigkeitsgemisch zu trennen.

Eine bevorzugte Ausführung des Abscheiders sieht vor, daß die Zentrifuge mit einem sich nach unten verjüngenden und auf der Antriebswelle der Hilfspumpe angeordneten Zentrifugenbehälter versehen ist, der eine zentrale Bodenöffnung und an der Oberseite einen nach innen weisenden Ringflansch aufweist.

Die sich an der Behälterwandung sammelnden Feststoffe fließen zusammen mit der Restflüssigkeit bei jedem Stillstand der Zentrifuge durch die Bodenöffnung in einen darunterliegenden abnehmbaren Auffangtopf, während die Flüssigkeit nach oben über den Ringflansch ansteigt und nach außen gelangt.

Bevorzugt ist weiters vorgesehen, daß die aus der Zentrifuge abfließenden Feststoffe in den abnehmbaren Absetzbehälter gesaugt und im Absetzbehälter abgelagert werden.

Das Pumpengehäuse ist bevorzugt aus drei Teilen zusammengesetzt, wobei sein Oberteil quaderförmig ausgebildet ist und den Motor und die Hilfspumpe aufnimmt und den Anbau des Abscheidegehäuses ermöglicht. An der Unterseite ist am Oberteil eine kreisförmige Aufnahme für den zylindrischen Mittelteil, der den Zentrifugeneintrittsraum begrenzt, und an den der ebenfalls zylindrische Unterteil ansetzbar ist. Dabei ist bevorzugt vorgesehen, daß der Zentrifugenbehälter einen äußeren Ringflansch aufweist, wobei das Unterteil des Pumpengehäuses einen Ringkanal umschließt, an den annähernd tangential ein Ablaufkanal anschließt. Durch die zylindrische Ausbildung des Unterteiles läßt sich der Ablaufkanal in die für den Einbau günstige Lage verdrehen. Der Ringkanal ist dabei nach oben durch eine Leitfläche vom Zentrifugeneintrittsraum abgeteilt, die unter Belassung eines Spaltes in den Zentrifugenbehälter führt. Hiebei ist in einer weiteren bevorzugten Ausführung vorgesehen, daß in den Zentrifugeneintrittsraum annähernd tangential die Ablaufleitung der erwähnten Speischale eintritt, wobei auch dieser Kanal in jede geeignete Lage verdreht werden kann. Die von der Speischale kommende Ablaufleitung kann auch noch den Antriebsmotor umgeben, sodaß das Spülwasser dessen Kühlung bewirkt.

Für eine möglichst reine Luftabscheidung ist in einer bevorzugten Ausführung vorgesehen, daß im Luftabscheideraum eine eine Wendel aufweisende Zyklonanordnung ausgebildet ist, durch die das Feststoff-Flüssigkeits-Saugluftgemisch geführt wird, wobei der Reinluftauslaß an einem innerhalb der Wendel zentral angeordneten Absaugrohr ausgebildet ist, der durch einen Verschlußkörper verschließbar ist. Der Verschlußkörper, der bei einer unerwarteten Überflutung des Abscheiders die Wiederansaugung von Flüssigkeit in die Reinluft verhindert, könnte als Schwimmer ausgebildet sein. Eine bevorzugte Ausführung sieht vor, daß der Verschlußkörper in die Schließstellung federbeaufschlagt angeordnet, und durch den Unterdruck der Saugpumpe in Offenstellung gehalten ist, wobei eine Steuereinrichtung vorgesehen ist, die den Unterdruck bei Überschreiten eines maximalen Füllstandes im Gehäuse aufhebt.

Eine weitere bevorzugte Ausführung sieht vor, daß für den Einbau in eine Behandlungsapparatur die Teile des Abscheiders in einem unterteilten Gehäuse vorgesehen sind.

Weiters wird der gefüllte Absetzbehälter nicht unmittelbar entleert, sondern gegen einen leeren Behälter ausgetauscht werden. Hiezu sind die Zyklonanordnung und das Pumpengehäuse abnehmbar, sodaß der Abscheider innerhalb kürzester Zeit wieder einsetzbar ist. Die Entleerung und eventuelle Gewinnung metallischer Anteile kann somit an einem beliebigen Ort durchgeführt werden.

Nachstehend wird nun die Erfindung an Hand der Figuren der beiliegenden Zeichnungen näher beschrieben, ohne darauf beschränkt zu sein.

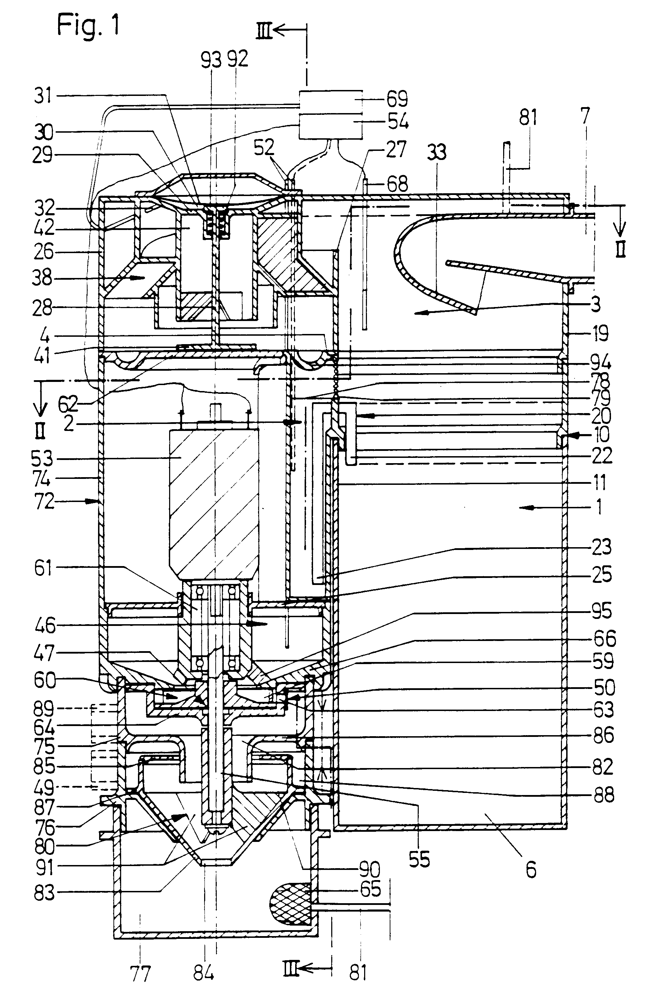

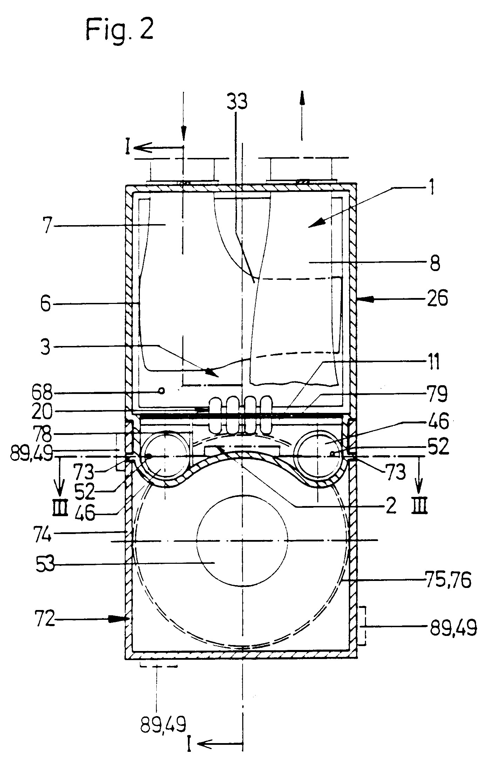

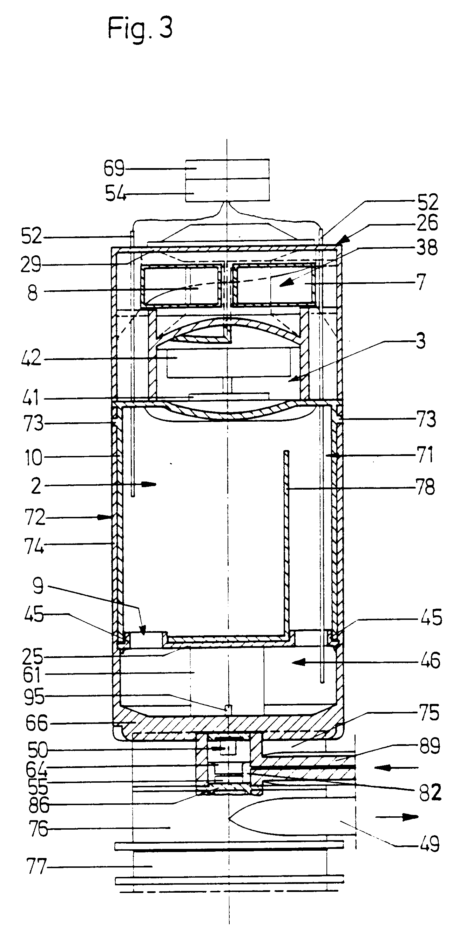

Die Fig. 1 zeigt einen Vertikalschnitt durch eine erste Ausführung eines Abscheiders gemäß der Linie I-I der Fig. 2, die Fig. 2 einen Horizontalschnitt nach der Linie II-II in Fig. 1, die Fig. 3 einen Schnitt nach der Linie III-III in Fig. 1, und die Fig. 4 - 6 den Fig. 1 - 3 entsprechende Darstellungen einer zweiten Ausführung.

Ein Abscheider entsprechend den Figuren 1 - 3 weist ein Gehäuse auf, das durch eine Trennwand 11, die mit Abstand zur Gehäuseabdeckung 4 endet, in einen Absetzbehälter 1 und einen Nebenbehälter 2, unterteilt ist.

Oberhalb beider verbleibt ein gemeinsamer Raum, der Teil eines Luftabscheideraumes 3 ist, der in einem Aufsatz 26 ausgebildet ist. Oberhalb des Absetzbehälters 1 ist ein Einlaß 7 für das von einem zahnärztlichen Saughandstück kommende Feststoff-Flüssigkeits-Saugluftgemisch vorgesehen, wobei diesem eine erste Umlenkfläche 33 zugeordnet ist, sodaß der Endteil des Einlasses etwa U-förmig ausgebildet ist. Die Umlenkfläche 33 erweitert sich vom Einlaß 7 aus in der Breite zur Außenwand 19 des Gehäuses 10 hin. Der Absetzbehälter 1 bildet einen abnehmbaren Sammeltopf 6, der von unten aufgeschoben und dichtend gehalten ist. Das durch den Einlaß 7 und die Umlenkfläche 33 strömende Gemisch trennt durch die Umlenkung, die Verwirbelung und den Aufprall an die Außenwand 19 Feststoffe und Flüssigkeit von der Saugluft ab, die sich im Absetzbehälter 1 sammeln. Dieser bildet gleichzeitig eine Beruhigungszone für die Ablagerung der Feststoffe am Boden des Sammeltopfes 6. Mit Erreichen einer bestimmten Füllhöhe der Flüssigkeit im Absetzbehälter 1 verdrängt weiter zufließendes Feststoff-Flüssigkeitsgemisch geklärte, jedoch noch Feststoffe enthaltende Flüssigkeit über eine oberhalb des maximalen Feststoffablagerungsniveaus angeordnete Übertrittseinrichtung in den Nebenbehälter 2, die beliebiger Art sein kann. Vorzugsweise ist ein diskontinuierlicher Flüssigkeitsübertritt durch den gezeigten Saugheber 20 vorgesehen, dessen längerer Schenkel 23 im Nebenbehälter 2 mündet. Die Eintrittsöffnung des kürzeren Schenkels 22 liegt dabei oberhalb der maximalen Ablagerungshöhe und unterhalb des Einsteckrandes des Sammeltopfes 6 und das Überlaufniveau des Saughebers 20 liegt tiefer als der obere Rand der Trennwand, von dem ein Gitter 79 zur Abdeckung 4 hochgezogen ist. Der Nebenbehälter 2 ist von einem weiteren Gehäuse 72 umgeben und mit einem Flüssigkeitsauslaß 9 versehen, dessen Austrittsöffnung 63 gegen den Eintritt von Falschluft durch ein Rückschlagventil 50 gesichert ist.

Die von den Feststoffen und der Flüssigkeit befreite Luft wird entlang eines in Verlängerung der Trennwand 11 in den Aufsatz 26 sich erstreckenden Wandabschnittes 27 nach oben, in einer Schraubenlinie eines Zyklons 38 um ein zentrales Absaugrohr 42 nach unten, sodann an dessen Ende durch das Absaugrohr 42 wieder nach oben und schließlich durch den Reinluftauslaß 8 zur Saugpumpe gesagt. Das Absaugrohr 42 ist durch einen Verschlußkörper 41 verschließbar, der an einem zentral durch das Absaugrohr 42 nach oben ragenden Stab 28 angeordnet ist, der die obere Abdeckung 29 des Aufsatzes 26 durchsetzt und dort einen Kopf 93 aufweist, wobei zwischen der Abdeckung 29 und dem Kopf 93 eine Druckfeder 92 angeordnet ist, sodaß der Verschlußkörper 41 in Schließrichtung beaufschlagt ist. Die obere Abdeckung 29 begrenzt eine Kammer 30, in der eine Membran 31 angeordnet ist, und über eine Leitung 32, die an den Reinluftauslaß 8 angeschlossen ist, unter Unterdruck steht. Dadurch beaufschlagt die Membran 31 den Kopf 93 und hält den Verschlußkörper 41 in Offenstellung. In die Leitung 32 ist ein Ventil 69 eingesetzt, das über eine Steuerung 54 betätigt wird, der ein Flüssigkeitsniveaufühler 68 zugeordnet ist. Steigt die Flüssigkeit im Gehäuse 10 in den Luftabscheideraum 3 an, so wird über den Niveaufühler 68 das Ventil 69 betätigt, das die Kammer 30 mit der Außenluft in Verbindung setzt, sodaß unter Wirkung der Feder 92 der Verschlußkörper 41 das Absaugrohr 42 verschließt. Vorteilhaft wird dabei gleichzeitig auch die Saugpumpe selbst abgeschaltet. Eine Auffangrinne 94 rund um den Zyklon 38 sammelt Restflüssigkeit und leitet diese ins Gehäuse 10 vorzugsweise in den darunter liegenden Nebenbehälter 2.

Die Entleerung des Nebenbehälters erfolgt mittels einer als Flügelradpumpe ausgebildeten Hilfspumpe 47 über ein hochstehendes Rohrstück 45 und den Flüssigkeitsauslaß 9, dessen Austrittsöffnung 63 mit geringem Abstand oberhalb des Bodens 64 seitlich in der Pumpenkammer 60 ausgebildet ist. In diese ist der Ansaugkanal 46 der Hilfspumpe 47 eingesetzt, der eine Bodenplatte 66 mit einer in die Pumpenkammer mündenden mittleren Öffnung aufweist. Das Gehäuse 72 besteht aus einem den Motor 53 der Hilfspumpe 47 aufnehmenden Oberteil 74, dessen Oberseite 62 mit der Abdeckung 4 fluchtet und den Zyklon 38 des Luftabscheideraumes 3 nach unten begrenzt, einem Mittelteil 75 und einem Unterteil 76. Die vertikal verlaufende Antriebswelle 55 ist in einem Lagerkörper 61 gelagert, der in einen den Motoraufnahmeraum vom Ansaugkanal 46 trennenden Boden 25 eingesetzt ist, durch einen erweiterten Abschnitt des Ansaugkanals 46 ragt und an der horizontalen Bodenplatte 66 über Stützstege 95 abgestützt ist. Vom erweiterten Teil des Ansaugkanals 46 führt eine Luftleitung 71 durch das durch den Boden 25 führende Rohrstück 45 zurück in den Luftabscheideraum 3, wobei diese durch eine Trennwand 78 vom Nebenbehälter 2 abgeteilt ist. Die Antriebswelle 65 trägt direkt unterhalb der Öffnung in der Bodenplatte 66 das gekrümmte Leitflächen aufweisende Flügelrad 59 der Hilfspumpe 47. Aufgrund des die Austrittsöffnung 63 gegen Falschlufteintritt sichernden Rückschlagventils 50 ist unterhalb des die Pumpenkammer 60 vom Mittelteil 75 trennenden Bodens 64 Normaldruck gegeben. Die Hilfspumpe 47 wird in Abhängigkeit vom Flüssigkeitsstand im Ansaugkanal 46 und im Nebenbehälter 2, der von Fühlern 52 abgetastet wird, über die Steuerung 54 geschaltet.

Der Mittelteil 75 des Pumpengehäuses 72 nimmt einen Zentrifugeneintrittsraum 82 auf, und ist zylindrisch ausgebildet, sodaß er in jede beliebige Stellung verdreht werden kann. Der Zentrifugeneintrittsraum 82 ist ebenfalls von der Antriebswelle 55 durchsetzt, auf der im Anschluß an das Flügelrad 59 über Stützstege 91 ein Zentrifugenbehälter 83 angeordnet ist.In den Zentrifugeneintrittsraum 82, der nach unten durch eine Leitfläche 86 begrenzt ist, die im peripheren Teil horizontal verläuft und in eine mit der Antriebswelle 55 koaxiale in den Zentrifugeninnenraum 90 ragende Hülse übergeht, mündet im wesentlichen tangential eine Ablaufleitung 89 (Fig. 3) der Speischale. Das im Zentrifugeneintrittsraum 82 sich aus der Ablaufleitung 89 und der Austrittsöffnung 63 vereinigende Gemisch fließt in die Zentrifuge 80, die im nachfolgenden Unterteil 76 des Pumpengehäuses ausgebildet ist. Der Zentrifugenbehälter 83 verjüngt sich nach unten zu einer Bodenöffnung 84, durch die abzentrifugierte Feststoffe in den auf den Unterteil 76 aufgesetzten Auffangtopf 77 gelangen, in dem sich aus der Zentrifuge 80 bei deren Stillstand gemeinsam mit Restflüssigkeit abfließende Feststoffe absetzen. Die Flüssigkeit steigt hingegen im Zentrifugenbehälter 83 nach oben und tritt über einen nach innen abstehenden Ringflansch 85 in einen äußeren Ringkanal 88 des Unterteiles 76, wobei der Ringkanal zum Auffangtopf 77 hin durch einen äußeren Ringflansch 87 des Zentrifugenbehälters 83 abgedeckt ist. Die gereinigte Flüssigkeit fließt dann über den Ablaufkanal 49 (Fig. 3) ab, der ebenso wie die Ablaufleitung 89 der Speischale in jede beliebige Stellung verdrehbar ist. Da der Auffangtopf 77 meist ein begrenztes Fassungsvermögen aufweist, das geringer als das des Sammeltopfes 6 des Absetzbehälters 1 ist, ist weiters der Auffangtopf 77 über eine Leitung 81 mit dem Gemischeinlaß 7 verbunden, wobei die Eintrittsöffnung durch ein Sieb 65 überdeckt ist. Der in der Zentrifuge 80 abgeschiedene überschüssige Feinschlamm wird somit in den Gemischeinlaß 7 zurückgesaugt, und verbleibt zu einem Teil im Absetzbehälter 1. Reste der Feststoffe werden mit der Restflüssigkeit in der bereits beschriebenen Weise wieder in den Zentrifugeneintrittsraum 82 mit Hilfe der Hilfspumpe 47 ausgetragen.

Das Abscheidegehäuse 10 ist vom Oberteil 74 des Gehäuses 72 in einfacher Weise trennbar, sobald der Aufsatz 26 abgenommen ist. Die beiden Rohrstücke 45 bilden auch Aufsteckteile für den Nebenbehälter 2, der an der Oberseite seitliche Stifte 73 trägt, die von oben in Schlitze der Seitenwände des Gehäuses 72 einsetzbar sind.

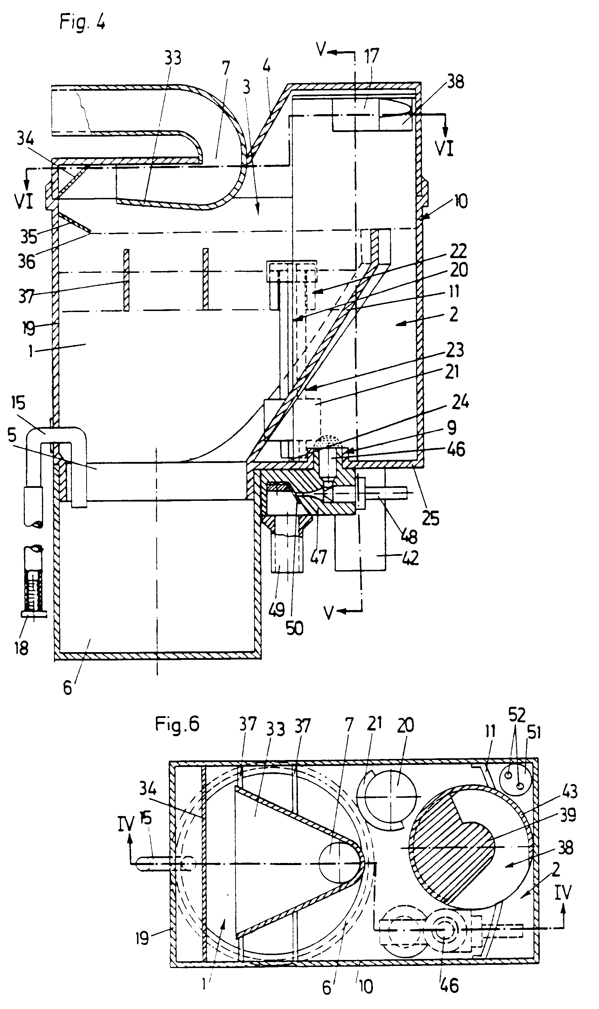

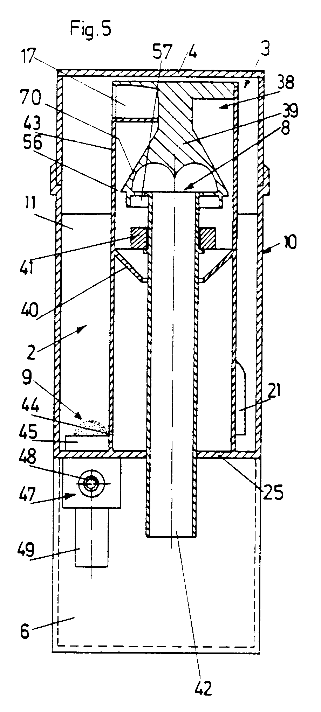

Entsprechend den Figuren 4 bis 6 weist der Abscheider ein im Horizontalschnitt rechteckiges Gehäuse 10 auf. Die Trennwand 11 bildet im wesentlichen einen Teil eines Kegelstumpfmantels, also einen Trichterwandteil, durch den vertikal der Saugheber 20 geführt ist. Dabei durchdringt der längere Schenkel 23 die Trennwand 11 und mündet bodennah im Nebenbehälter 2, an dessen Boden 25 er mit einem Distanzfortsatz 24 aufliegt. die Umlenkfläche 33 erweitert sich vom Einlaß 7 aus in der Breite zur Außenwand 19 hin (Fig. 5) und im Eckbereich zwischen der Gehäuseabdeckung 4 und der Außenwand 19 sind weitere Umlenkflächen 34, 35 schräg angeordnet, auf die das von der ersten Umlenkfläche 33 kommende Gemisch auftrifft. Die Umlenkkante 36 der dritten Umlenkfläche 35 liegt dabei in der Oberseite der Trennwand 11.

Der Absetzbehälter weist unterhalb der Trennwand 11 einen zylindrischen Teil 5 auf, auf den der Sammeltopf 6 von unten abnehmbar aufgeschoben ist. Ein weiterer Saugheber 15 dient vor Abnahme des Sammeltopfes 6 zur Entleerung der im Absetzbehälter 1 stehenden Flüssigkeit, und ist während des Betriebes durch einen Stopfen 18 verschlossen. Im Oberteil des Absetzbehälters 1 sind Prallwände 37 vorgesehen, die zur Beruhigung der Flüssigkeit dienen. Zu diesem Zweck liegen die Eintrittsöffnungen des kürzeren Schenkels 22 des Saughebers 20 in der Höhe der Unterseite der Prallwände 37, und das Überlaufniveau des Saughebers 20 tiefer als die Oberseiten der Prallwände 37. Der Saugheber 20 wird dabei bevorzugt aus mehreren Röhrchen gebildet, die gemeinsam in einen Rohrstutzen 21 der Trennwand 11 eingesteckt sind.

Zwischen dem Absetzbehälter 1 und dem Nebenbehälter 2 mit dem in die Hilfspumpe 47 führenden Flüssigkeitsauslaß 9 kann zumindest ein Zwischenbehälter vorgesehen sein, in den der Saugheber 20 mündet, wobei ein weiterer Saugheber 20 die sich sammelnde Flüssigkeit in den Nebenbehälter 2 überführt. Der Zwischenbehälter bildet dadurch einen weiteren Absetzbehälter.

Der Reinluftauslaß 8 ist wiederum im Luftabscheideraum 3 oberhalb des Nebenbehälters 2 vorgesehen. Im Nebenbehälter 2 ist ein Zylinder 43 angeordnet, der über eine bodennahe Durchtrittsöffnung 44 mit dem Nebenbehälter 2 kommuniziert. Zentral im Zylinder 43 erstreckt sich das Absaugrohr 42 durch den Boden 25, dessen oberes Ende den Reinluftauslaß 8 darstellt. Dieser ist durch eine Umlenkkuppel 70 unter Belassung einer Ringöffnung überdeckt. Das Absaugrohr 42 umgibt ein Schwimmer 41 als Verschlußkörper, der bei Ansteigen der Flüssigkeit in eine Ringnut 57 der Umlenkkuppel 70 eingesaugt wird, und den Reinluftauslaß 8 verschließt. Oberhalb der Umlenkkuppel 70 ist der Zyklon 38 vorgesehen, sodaß die Saugluft durch eine seitliche Lufteintrittsöffnung 17 aus dem Luftabscheideraum 3 um ein Kernstück 39 geführt, durch einen Ringspalt 56 zwischen der Umlenkkuppel 70 und dem Zylinder 43 nach oben umgelenkt und innerhalb der Umlenkkuppel 70 wieder nach unten in das Absaugrohr 42 umgelenkt wird. Sich absetzende Restflüssigkeit fließt dabei über Leitflächen 40 nach unten, wo sie durch die Öffnung 44 in den Nebenbehälter 2 austreten kann.

Die Entleerung des Nebenbehälters 2 erfolgt über den Flüssigkeitsauslaß 9 im vom Boden 25 hochstehenden Rohrstück 45. In dieses ist der Ansaugkanal 46 einer als Hilfspumpe 47 vorgesehenen Wasserstrahlpumpe eingesetzt, und von einem Sieb überdeckt. An der Austrittsseite der Wasserstrahlpumpe ist das Rückschlagventil 50 angeordnet.

Im Nebenbehälter 2 ist, wie aus Fig. 6 ersichtlich, ein weiterer mit dem Nebenbehälter bodenseitig kommunizierender Raum 51 abgeteilt, in den sich von der Gehäuseabdeckung 4 nach unten Füllstandsmaßfühler 52 erstrecken. Diese können in jeder für die Schaltung des Steuerstromkreises des in der Wasserversorgungsleitung 48 eingesetzten Magnetventils geeigneten Weise ausgebildet sein, bevorzugt sprechen sie auf die elektrische Leitfähigkeit der Flüssigkeit an.

## Patentansprüche

1. Verfahren zur Trennung eines dentalen Feststoff-Flüssigkeits-Saugluftgemisches in einem zahnärztlichen Abscheider, wobei zuerst die transportierende Saugluft in einem Luftabscheideraum (3) entfernt und das verbleibende Feststoff-Flüssigkeitsgemisch in einem abnehmbaren Absetzbehälter (1) gesammelt wird in dem der Hauptteil der Feststoffe abgelagert wird, wobei die Flüssigkeit durch einen gegen einen Falschlufteintritt gesicherten Flüssigkeitsauslaß (9) gegen den Saugluftunterdruck ausgetragen wird, wenn der Flüssigkeitsstand eine vorgegebene Höhe erreicht, dadurch gekennzeichnet, daß die Flüssigkeit aus einer oberhalb einer maximalen Feststoffablagerungshöhe liegenden Flüssigkeitssammelzone des Absetzbehälters (1) in mindestens einen weiteren, in den Luftabscheideraum (3) offenen Absetzbehälter überführt und aus dem weiteren Absetzbehälter zum Flüssigkeitsauslaß (9) übergeleitet wird.

2. Verfahren zur Trennung eines dentalen Feststoff-Flüssigkeits-Saugluftgemisches in einem zahnärztlichen Abscheider, wobei zuerst die transportierende Saugluft in einem Luftabscheideraum (3) entfernt und das verbleibende Feststoff-Flüssigkeitsgemisch in einem abnehmbaren Absetzbehälter (1) gesammelt wird, in dem der Hauptteil der Feststoffe abgelagert wird, wobei die Flüssigkeit durch einen gegen einen Falschlufteintritt gesicherten Flüssigkeitsauslaß (9) gegen den Saugluftunterdruck ausgetragen wird, wenn der Flüssigkeitsstand eine vorgegebene Höhe erreicht, dadurch gekennzeichnet, daß die Flüssigkeit aus einer oberhalb einer maximalen Feststoffablagerungshöhe liegenden Flüssigkeitssammelzone des Absetzbehälters (1) durch den Flüssigkeitsauslaß (9) in eine unter Normaldruck stehende Zentrifuge (80) ausgetragen und dort zentrifugiert wird, wobei in der Flüssigkeit enthaltenen Feststoffe nach jeder Zentrifugierphase unter Schwerkrafteinwirkung aus der Zentrifuge (80) ausfließen.

3. Verfahren nach Anspruch 2, dadurch gekennzeichnet, daß die aus der Zentrifuge (80) abfließenden Feststoffe in den abnehmbaren Absetzbehälter (1) gesaugt und im Absetzbehälter (1) abgelagert werden.

4. Abscheider zur Trennung eines Feststoff-Flüssigkeits-Saugluftgemisches in zahnärztlichen Absaugeinrichtungen, mit einem Gehäuse (10) mit einem Umlenkflächen aufweisenden Luftabscheideraum (3), in den ein Einlaß (7) für das von einer Saugdüse kommende Gemisch mündet, und von dem ein Reinluftauslaß (8) zu einer Saugpumpe führt, mit einem unter dem Luftabscheideraum (3) angeordneten, vom Gehäuse (10) abnehmbaren Absetzbehälter (1) für die Ablagerung der Feststoffe, und mit einer ein hochstehendes Rohrstück (45) und eine Hilfspumpe (47) aufweisenden Einrichtung zur Überleitung der sich im Absetzbehälter (1) sammelnden Flüssigkeit zu einem gegen einen Falschlufteintritt gesicherten Flüssigkeitsauslaß (9), dadurch gekennzeichnet, daß die Einrichtung zur Überleitung der Flüssigkeit zumindest einen weiteren, in den Luftabscheideraum (3) offenen Absetzbehälter aufweist, wobei die Eintrittsöffnung in jedem Absetzbehälter oberhalb einer maximalen Feststoffablagerungshöhe liegt, und daß die Hilfspumpe (47) dem letzten Absetzbehälter zugeordnet und der Flüssigkeitsauslaß (9) durch ein an der Druckseite der Hilfspumpe (47) angeordnetes Rückschlagventil (50) gegen den Falschlufteintritt gesichert ist.

5. Abscheider zur Trennung eines Feststoff-Flüssigkeits-Saugluftgemisches in zahnärztlichen Absaugeinrichtungen, mit einem Gehäuse (10) mit einem Umlenkflächen aufweisenden Luftabscheideraum (3), in den ein Einlaß (7) für das von einer Saugdüse kommende Gemisch mündet, und von dem ein Reinluftauslaß (8) zu einer Saugpumpe führt, mit einem unter dem Luftabscheideraum (3) angeordneten, vom Gehäuse (10) abnehmbaren Absetzbehälter (1) für die Ablagerung der Feststoffe, und mit einer ein hochstehendes Rohrstück (45) und eine Hilfspumpe (47) aufweisenden Einrichtung zur Überleitung der sich im Absetzbehälter (1) sammelnden Flüssigkeit zu einem gegen einen Falschlufteintritt gesicherten Flüssigkeitsauslaß (9), dadurch gekennzeichnet, daß die Eintrittsöffnung der Einrichtung zur Überleitung der Flüssigkeit oberhalb einer maximalen Feststoffablagerungshöhe liegt, daß die Hilfspumpe (47) als Flügelradpumpe ausgebildet ist, und daß an deren Druckseite eine Zentrifuge (80) angeschlossen ist, wobei der Flüssigkeitsauslaß (9) gegen einen Falschlufteintritt durch ein Rückschlagventil (50) gesichert ist, das zwischen der Hilfspumpe (47) und der Zentrifuge (80) im Zentrifugeneintrittsraum (82) angeordnet ist.

6. Abscheider nach Anspruch 4 oder 5, dadurch gekennzeichnet, daß das Rohrstück (45) den Ansaugkanal (46) der Hilfspumpe (47) bildet.

7. Abscheider nach Anspruch 5, dadurch gekennzeichnet, daß die Zentrifuge (80) mit einem sich nach unten verjüngenden und auf der Antriebswelle (55) der Hilfspumpe (47) angeordneten Zentrifugenbehälter (83) versehen ist, der eine zentrale Bodenöffnung (84) und an der Oberseite einen nach innen weisenden Ringflansch (85) aufweist.

8. Abscheider nach Anspruch 7, dadurch gekennzeichnet, daß der Zentrifugeneinlaß (82) nach unten von einer ringförmigen Leitfläche (86) des zylindrischen Mittelteiles (75) des Pumpengehäuses (72) begrenzt ist, die mit radialem Abstand in den Zentrifugenbehälter (83) ragt.

9. Abscheider nach Anspruch 7, dadurch gekennzeichnet, daß der Zentrifugenbehälter (83) an der Außenseite einen Ringflansch (87) aufweist, wobei zwischen der Leitfläche (86), dem außenseitigen Ringflansch (87) und dem zylindrischen Unterteil (76) des Pumpengehäuses (72) ein Ringkanal (88) ausgebildet ist, an den annähernd tangential ein Ablaufkanal (49) für die Flüssigkeit anschließt.

10. Abscheider nach Anspruch 9, dadurch gekennzeichnet, daß am Unterteil (76) des Pumpengehäuses (72) ein nach unten abnehmbarer Auffangtopf (77) angeordnet ist, in den die zentrale Bodenöffnung (84) des Zentrifugenbehälters (83) mündet.

11. Abscheider nach Anspruch 10, dadurch gekennzeichnet, daß der Auffangtopf (77) über eine Rücksaugleitung (81) mit dem Luftabscheideraum (3) verbunden ist.

12. Abscheider nach Anspruch 5, dadurch gekennzeichnet, daß in den Zentrifugeneintrittsraum (82) annähernd tangential die Ablaufleitung (89) einer Speischale eintritt.

13. Abscheider nach Anspruch 4 oder 5, dadurch gekennzeichnet, daß im Luftabscheideraum (3) eine eine Wendel aufweisende Zyklonanordnung (38) ausgebildet ist, wobei der Reinluftauslaß (8) an einem innerhalb der Wendel zentral angeordneten Absaugrohr (42) ausgebildet ist, der durch einen Verschlußkörper (41) verschließbar ist.

14. Abscheider nach Anspruch 13, dadurch gekennzeichnet, daß der Verschlußkörper (41) in die Schließstellung federbeaufschlagt angeordnet, und durch den Unterdruck der Saugpumpe in Offenstellung gehalten ist, wobei eine Steuereinrichtung vorgesehen ist, die den Unterdruck bei Überschreiten eines maximalen Füllstandes im Gehäuse (10) aufhebt.

15. Abscheider nach einem der Ansprüche 4 bis 14, dadurch gekennzeichnet, daß für den Einbau in eine Behandlungsapparatur die Teile des Abscheiders in einem unterteilten Gehäuse (10) vorgesehen sind.

## Claims

1. A method of separating a dental solid-liquid-suction air mixture in a dental separator, wherein firstly the transporting suction air is removed in an air separation space (3) and the remaining solid-liquid mixture is collected in a removable settlement container (1) in which the main part of the solids is deposited, wherein the liquid is discharged through a liquid outlet (9) which is safeguarded against incorrect air intake, against the reduced suction air pressure when the level of liquid reaches a predetermined height, characterised in that the liquid is transferred from a liquid collection zone of the settlement container (1), which zone is above a maximum solid deposit height, into at least one further settlement container which is open into the air separation space (3), and is carried over from the further settlement container to the liquid outlet (9).

2. A method of separating a dental solid-liquid-suction air mixture in a dental separator, wherein firstly the transporting suction air is removed in an air separation space (3) and the remaining solid-liquid mixture is collected in a removable settlement container (1) in which the main part of the solids is deposited, wherein the liquid is discharged through a liquid outlet (9) which is safeguarded against incorrect air intake, against the reduced suction air pressure when the level of liquid reaches a predetermined height, characterised in that the liquid is discharged from a liquid collection zone of the settlement container (1), which zone is above a maximum solid deposit height, through the liquid outlet (9) into a centrifuge (80) which is under normal pressure, and is centrifuged therein, wherein solids contained in the liquid, after each centrifuging phase, flow out of the centrifuge (80) under the effect of the force of gravity.

3. A method according to claim 2 characterised in that the solids which flow out of the centrifuge (80) are sucked into the removable settlement container (1) and deposited in the settlement container (1).

4. A separator for separation of a solid-liquid-suction air mixture in dental suction removal apparatuses, having a housing (10) with an air separation space (3) which has deflection surfaces and into which opens an inlet (7) for the mixture coming from a suction nozzle and from which a clean air outlet (8) leads to a suction pump, a settlement container (1) for deposit of the solids, which is arranged under the air separation space (3) and which is removable from the housing (10), and an arrangement having an upright pipe portion (45) and an auxiliary pump (47), for transfer of the liquid which accumulates in the settlement container (1) to a liquid outlet (9) which is safeguarded against incorrect air intake, characterised in that the liquid transfer arrangement has at least one further settlement container which is open into the air separation space (3), wherein the intake opening into each settlement container is above a maximum solid deposit height, and that the auxiliary pump (47) is associated with the last settlement container and the liquid outlet (9) is safeguarded against incorrect air intake by a non-return valve (50) which is arranged at the pressure side of the auxiliary pump (47).

5. A separator for separation of a solid-liquid-suction air mixture in dental suction removal apparatuses, having a housing (10) with an air separation space (3) which has deflection surfaces and into which opens an inlet (7) for the mixture coming from a suction nozzle and from which a clean air outlet (8) leads to a suction pump, a settlement container (1) for deposit of the solids, which is arranged under the air separation space (3) and which is removable from the hosing (10), and an arrangement having an upright pipe portion (45) and an auxiliary pump (47), for transfer of the liquid which accumulates in the settlement container (1) to a liquid outlet (9) which is safeguarded against incorrect air intake, characterised in that the intake opening of the liquid transfer arrangement is above a maximum solid deposit height, that the auxiliary pump (47) is in the form of an impeller pump, and that a centrifuge (80) is connected to the pressure side thereof, wherein the liquid outlet (9) is safeguarded against incorrect air intake by a non-return valve (50) which is arranged between the auxiliary pump (47) and the centrifuge (80) in the centrifuge intake space (82).

6. A separator according to claim 4 or claim 5 characterised in that the pipe portion (45) forms the intake passage (46) of the auxiliary pump (47).

7. A separator according to claim 5 characterised in that the centrifuge (80) is provided with a centrifuge container (83) which tapers downwardly and which is arranged on the drive shaft (55) of the auxiliary pump (47) and which has a central bottom opening (84) and which at the top side has an inwardly facing annular flange (85).

8. A separator according to claim 7 characterised in that the centrifuge inlet (82) is defined downwardly by an annular guide surface (86) of the cylindrical central part (75) of the pump housing (72), which projects with a radial spacing into the centrifuge container (83).

9. A separator according to claim 7 characterised in that on the outside the centrifuge container (83) has an annular flange (87), wherein provided between the guide surface (86), the outside annular flange (87) and the cylindrical bottom part (76) of the pump housing (72) is an annular passage (88) which is approximately tangentially adjoined by a drain passage (49) for the liquid.

10. A separator according to claim 9 characterised in that arranged at the bottom part (76) of the pump housing (72) is a catch cup (77) which is removable downwardly and into which the central bottom opening (84) of the centrifuge container (83) opens.

11. A separator according to claim 10 characterised in that the catch cup (77) is connected to the air separation space (3) by a suction return line (81).

12. A separator according to claim 5 characterised in that the drain line (89) of a spit dish opens approximately tangentially into the centrifuge intake space (82).

13. A separator according to claim 4 or claim 5 characterised in that a cyclone arrangement (38) having a helix configuration is provided in the air separation space (3), wherein the clean air outlet (8) is provided on a suction removal pipe (42) which is arranged centrally within the helix configuration and which is closable by a closure body (41).

14. A separator according to claim 13 characterised in that the closure body (41) is arranged to be spring-loaded into the closed position and is held in the open position by the reduced pressure of the suction pump, wherein there is provided a control means which terminates the reduced pressure when a maximum filling level in the housing (10) is exceeded.

15. A separator according to one of claims 4 to 14 characterised in that for installation in a treatment apparatus the parts of the separator are provided in a subdivided housing (10).

## Revendications

1. Procédé pour la séparation d'un mélange dentaire de substances solides, de liquide et d'air d'aspiration dans un séparateur dentaire, selon lequel l'air d'aspiration véhiculant lesdits composants est tout d'abord éliminé dans un espace de séparation d'air (3) et le mélange restant de substances solides et de liquide est recueilli dans un récipient de dépôt amovible (1) dans lequel la majeure partie des substances solides se dépose, le liquide étant évacué vers la dépression de l'air d'aspiration par une sortie de liquide (9) protégée à l'encontre d'une entrée d'air parasite, lorsque le niveau de liquide atteint une hauteur prédéfinie, caractérisé en ce que le liquide est transféré d'une zone collectrice de liquide du récipient de dépôt (1), située au-dessus d'une hauteur maximale de dépôt de substances solides, dans au moins un autre récipient de dépôt ouvert sur l'espace de séparation d'air (3), puis de cet autre récipient de dépôt vers la sortie de liquide (9).

2. Procédé pour la séparation d'un mélange dentaire de substances solides, de liquide et d'air d'aspiration dans un séparateur dentaire, selon lequel l'air d'aspiration véhiculant lesdits composants est tout d'abord éliminé dans un espace de séparation d'air (3) et le mélange restant de substances solides et de liquide est recueilli dans un récipient de dépôt amovible (1) dans lequel la majeure partie des substances solides se dépose, le liquide étant évacué vers la dépression de l'air d'aspiration par une sortie de liquide (9) protégée à l'encontre d'une entrée d'air parasite, lorsque le niveau de liquide atteint une hauteur prédéfinie, caractérisé en ce que le liquide est évacué d'une zone collectrice de liquide du récipient de dépôt (1), située au-dessus d'une hauteur maximale de dépôt de substances solides, en passant par la sortie de liquide (9), dans une centrifugeuse (80) soumise à une pression normale, et est centrifugé dans celle-ci, les substances solides contenues dans le liquide s'écoulant de la centrifugeuse (80) après chaque phase de centrifugation sous l'action de la gravité.

3. Procédé selon la revendication 2, caractérisé en ce que les substances solides s'écoutant de la centrifugeuse (80) sont aspirées dans le récipient de dépôt amovible (1) et se déposent dans celui-ci.

4. Séparateur pour la séparation d'un mélange de substances solides, de liquide et d'air d'aspiration dans des dispositifs d'aspiration dentaires, formé d'un boîtier (10) contenant un espace de séparation d'air (3) pourvu de surfaces de déviation, dans lequel débouche un orifice d'admission (7) prévu pour le mélange venant d'une tuyère d'aspiration et à partir duquel une sortie d'air pur (8) mène à une pompe aspirante, d'un récipient de dépôt (1) disposé sous l'espace de séparation d'air (3) et apte à être enlevé du boîtier (10), pour le dépôt des substances solides, et d'un dispositif pour le transfert du liquide s'accumulant dans le récipient de dépôt (1) vers une sortie de liquide (9) protégée à l'encontre d'une entrée d'air parasite, lequel dispositif comporte un élément tubulaire vertical (45) et une pompe auxiliaire (47), caractérisé en ce que le dispositif pour le transfert du liquide comporte au moins un autre récipient de dépôt ouvert sur l'espace de séparation d'air (3), l'ouverture d'entrée se trouvant dans chaque récipient de dépôt au-dessus d'une hauteur maximale de dépôt de substances solides, et en ce que la pompe auxiliaire (47) est associée au dernier récipient de dépôt et la sortie de liquide (9) est protégée à l'encontre de l'entrée d'air parasite grâce à un clapet anti-retour (50) disposé du côté refoulement de la pompe auxiliaire (47).

5. Séparateur pour la séparation d'un mélange de substances solides, de liquide et d'air d'aspiration dans des dispositifs d'aspiration dentaires, formé d'un boîtier (10) contenant un espace de séparation d'air (3) pourvu de surfaces de déviation, dans lequel débouche un orifice d'admission (7) prévu pour le mélange venant d'une tuyère d'aspiration et à partir duquel une sortie d'air pur (8) mène à une pompe aspirante, d'un récipient de dépôt (1) disposé sous l'espace de séparation d'air (3) et apte à être enlevé du boîtier (10), pour le dépôt des substances solides, et d'un dispositif pour te transfert du liquide s'accumulant dans le récipient de dépôt (1) vers une sortie de liquide (9) protégée à l'encontre d'une entrée d'air parasite, lequel dispositif comporte un élément tubulaire vertical (45) et une pompe auxiliaire (47), caractérisé en ce que l'ouverture d'entrée du dispositif pour le transfert du liquide se trouve au-dessus d'une hauteur maximale de dépôt de substances solides, en ce que la pompe auxiliaire (47) est conçue comme une pompe à roue-hélice, et en ce qu'une centrifugeuse (80) est raccordée au côté refoulement de ladite pompe, la sortie de liquide (9) étant protégée à l'encontre d'une entrée d'air parasite grâce à un clapet anti-retour (50) qui est disposé entre la pompe auxiliaire (47) et la centrifugeuse (80), dans l'espace d'entrée de centrifugeuse (82).

6. Séparateur selon la revendication 4 ou 5, caractérisé en ce que l'élément tubulaire (45) définit le canal d'aspiration (46) de la pompe auxiliaire (47).

7. Séparateur selon la revendication 5, caractérisé en ce que la centrifugeuse (80) est pourvue d'un récipient de centrifugeuse (83) qui va en s'effilant vers le bas et est disposé sur l'arbre d'entraînement (55) de la pompe auxiliaire (47), et qui présente une ouverture de fond centrale (84) et, sur te côté supérieur, une bride annulaire (85) dirigée vers l'intérieur.

8. Séparateur selon la revendication 7, caractérisé en ce que l'entrée de centrifugeuse (82) est délimitée vers le bas par une surface de guidage annulaire (86) de la partie centrale cylindrique (75) du boîtier de pompe (72), laquelle surface pénètre suivant un écartement radial dans le récipient de centrifugeuse (83).

9. Séparateur selon la revendication 7, caractérisé en ce que le récipient de centrifugeuse (83) comporte, sur le côté extérieur, une bride annulaire (87), étant précisé qu'il est prévu, entre la surface de guidage (86), la bride annulaire extérieure (87) et la partie inférieure cylindrique (76) du boîtier de pompe (72), un canal annulaire (88) auquel un canal d'écoulement (49) prévu pour le liquide fait suite à peu près tangentiellement.

10. Séparateur selon la revendication 9, caractérisé en ce qu'il est prévu, au niveau de la partie inférieure (76) du boîtier de pompe (72), un pot de réception (77) amovible par le bas dans lequel débouche l'ouverture de fond centrale (84) du récipient de centrifugeuse (83).

11. Séparateur selon la revendication 10, caractérisé en ce que le pot de réception (77) est relié à l'espace de séparation d'air (3) par l'intermédiaire d'une conduite d'aspiration de retour (81).

12. Séparateur selon la revendication 5, caractérisé en ce que la conduite d'écoulement (89) d'un crachoir entre à peu près tangentiellement dans l'espace d'entrée de centrifugeuse (82).

13. Séparateur selon la revendication 4 ou 5, caractérisé en ce qu'un dispositif de cyclone (38) présentant une hélice est formé dans l'espace de séparation d'air (3), la sortie d'air pur (8) étant formée au niveau d'un tube d'aspiration (42), disposé de façon centrale à l'intérieur de l'hélice, qui est apte à être obturé par un organe obturateur (41).

14. Séparateur selon la revendication 13, caractérisé en ce que l'organe obturateur (41) est disposé en étant sollicité par ressort dans la position fermée et est maintenu dans la position ouverte par la dépression de la pompe aspirante, étant précisé qu'il est prévu un dispositif de commande qui supprime la dépression lorsqu'un niveau maximal est dépassé dans le boîtier (10).

15. Séparateur selon l'une des revendications 4 à 14, caractérisé en ce que, pour le montage dans un appareillage de traitement, les éléments du séparateur sont prévus dans un boîtier (10) compartimenté.
